# EUROPEAN PATENT APPLICATION

(11) **EP 4 059 340 A1**
(43) Date of publication of application: **21.09.2022**
(21) Application number: 21163699.8
(22) Date of filing: 19.03.2021
(51) Int. Cl.: A01G 31/04

(54) **DEVICE FOR AUTOMATED PLANT CULTIVATION**

(71) Applicant: Fraunhofer-Gesellschaft zur Förderung der angewandten Forschung e.V., 80686 München (DE)
(72) Inventor: VOGEL, Simon, 52074 Aachen (DE); SCHILLBERG, Stefan, 52074 Aachen (DE)
(74) Representative: Pfenning, Meinig & Partner mbB

(57) **Abstract**

The invention relates to a device for automated plant cultivation and more specifically to a device having a conveyor belt (2) that can be moved along a conveyor path (1) for transporting plants and/or fungi (8). While the plants and/or fungi (8) are being transported along the conveyor path (1), which extends at least approximately horizontally in at least one first section (7) and at least approximately vertically in at least one second section (6), the plants and/or fungi (8) are at least temporarily supplied with water and nutrients by a nutrient supply unit (9). According to the invention the conveyor belt (2) is formed from a sheet of a thermoplastic material and has a plurality of recesses (3a) for receiving biological material such as seeds, cuttings, rhizomes or root balls of the plants and/or fungi (8), wherein at least one opening (3b) being formed in each of the recesses (3a) on the bottom side for penetration of roots and/or hyphen, respectively and/or for nutrient supply of the plants and/or fungi (8).

## Description

### TECHNICAL FIELD OF THE INVENTION

The invention relates to a device for automated plant cultivation and more specifically to a device having a conveyor belt that can be moved along a conveyor path for transporting plants and/or fungi. While the plants and/or fungi are being transported along the conveyor path, which extends at least approximately horizontally in at least one first section and at least approximately vertically in at least one second section, the plants and/or fungi are at least temporarily supplied with water and nutrients by a nutrient supply unit. According to the invention the conveyor belt is formed from a sheet of a thermoplastic material and has a plurality of recesses for receiving biological material such as seeds, cuttings, rhizomes or root balls of the plants and/or fungi, wherein at least one opening being formed in each of the recesses on the bottom side for penetration of roots and/or hyphen, respectively and/or for nutrient supply of the plants and/or fungi.

### BACKGROUND OF THE INVENTION

Hydroponic and aeroponic plant cultivation has been known for many years; in particular in the last decades, these plant-cultivating methods have been used for intensively exploiting cultivation systems, particularly for greenhouse crops, e.g. tomatoes, cucumbers and lettuces. The mass production of agricultural products in fully air-conditioned buildings in which external influences are strictly controlled is also referred to as "indoor farming."

In this connection, there are known systems for cultivating plants and/or fungi in which the plants and/or fungi are arranged in a shelf system and supplied with a nutrient medium in an automated manner during the growth phase. One system of this kind is described in JP 2014-168420 A, for example. In this case, the plants and/or fungi intended to be cultivated are individually fixed in a carrier medium in a horizontal plane and are supplied with water and nutrients by means of regular nutrient medium flooding and drainage. In addition, the plants and/or fungi are artificially illuminated by fluorescent tubes or LEDs attached directly above the plants and/or fungi.

Furthermore, AT 250728 discloses a special greenhouse in the form of a tower greenhouse. What is essential in this case is that the height of a building is exploited to implement a conveyor path for cultivating plants and/or fungi. The described greenhouse has a plurality of plant-transporting conveyor belts arranged in a serpentine manner; the conveyor belt is in the form of a circulating path and has upper and lower deflection pulleys such that the plants and/or fungi can be moved vertically in different directions. To ensure efficient illumination, suitable fluorescent tubes are provided between the vertically arranged conveyor belts.

A further technical solution for automated plant cultivation is described in US 2012/0279122 A1. The described system has a conveyor belt that is arranged in a serpentine manner and extends vertically in part. To deflect the conveyor belt, corresponding deflection pulleys are provided. Furthermore, special containers are provided to transport the plants and/or fungi; carrier material for holding seeds or plants and/or fungi is located in said containers, which are hooked into the circulating conveyor belt by means of special hook elements. In this case, the described containers for holding the plants and/or fungi extend over the entire range of the conveyor belt and can each hold a plurality of plants and/or fungi one next to the other.

Despite the increased energy demand, the known automated systems for cultivating plants and/or fungi have a number of advantages over conventional agriculture in fields. In addition to complete weather independence, the climatic conditions inside the greenhouse can be optimally adapted to any given plants and/or fungi, thereby achieving constant plant growth. Furthermore, owing to special water recovery systems, a significantly smaller amount of water is required to cultivate the plants and/or fungi than if farming fields outdoors. Moreover, a comparably small amount of fertilizer is required, and cultivating plants and/or fungi in fully air-conditioned spaces makes it possible to grow the plants and/or fungi without pesticides.

Furthermore, the use of vertically arranged conveyor paths achieves the advantage of significantly improved exploitation of the available surface area. This is highly advantageous in particular in urban areas and developed countries that have a comparably small amount of surface area suitable for agriculture, such as Japan.

The problem with the known systems for automated plant cultivation in fully air-conditioned rooms is often that it is relatively complex to adapt the used systems to different plants and/or fungi. When the plants and/or fungi grown are changed, account has to be taken of the fact that the size of different plants and/or fungi changes to different extents and in different periods of time in the growth phase. It is difficult to adapt the known systems for automated plant cultivation to any given altered conditions. What is more, supplying the plants and/or fungi with the required nutrients and water without causing damage to the leaves or roots often presents problems.

In the OrbiPlant and OrbiLoop plant cultivation system such as e.g. described in WO 2018/220011 A1, a conveyor belt is required for anchoring and transporting plants and/or fungi, which ensures that the plant material (e.g. seeds or plants and/orfungi) is held securely. The conveyor belt must be flexible enough to negotiate the curves of the loops (Omegas), but also stiff enough not to buckle across the width of the conveyor belt. Furthermore, it must be as impermeable to water as possible to provide a barrier between the wetted root zone and the plant foliage. Another important criterion is its food-safe and, above all, cost-effective procurement. Smooth, white (light-reflecting) surfaces that are easy to clean are of great advantage.

Until now, OrbiPlant technology has used commercially available hollow chamber PVC roller slats by the meter. The simple extension and replacement of individual slats had advantages for constantly varying culture requirements but the disadvantage of not being completely impermeable to water from the irrigated root area to the leaf side of the plants and/or fungi. Such slat systems would not be suitable for professional use of this type of conveyor with much higher weight carrying capacities. Drilling holes in the slats and using adaptors as plant supports has also proven to be an inadequate solution for commercial use.

### SUMMARY OF THE INVENTION

Starting from the known prior-art systems for automated plant cultivation and the above-mentioned problems, the problem addressed by the invention is that of providing a plant cultivation system that allows an easier and more convenient realization and allows more flexibility. Furthermore, the addressed problem of disadvantage of not complete water impermeability from the irrigated root area to the leaf side of the plants and/or fungi still needs to be solved.

The aforementioned problem is solved by a device for promoting the growth of plants and/or fungi according to claim 1 as well as a sheet of a thermoplastic material for use in an inventive device according to claim 8. The dependent claims describe advantageous embodiments.

According to the present invention the plants and/or fungi are at least temporarily fixed relative to the conveyor belt during transport along the conveyor path such that at least parts of roots of the plants and/or fungi protrude into a region located below a lower surface of the conveyor belt, while at least parts of leaves and/or fruits of the plants and/or fungi protrude into a region located above an upper surface of the conveyor belt which opposes the lower surface, a nutrient-medium supply being arranged below the conveyor belt such that the plants and/or fungi fixed on the conveyor belt, in particular the roots below the conveyor belt, are aeroponically supplied with nutrient medium. In this context, essential features of the invention are that the plants and/or fungi, during their growth phase, are fixed on the conveyor belt, continuously moved and at least temporarily transported along a light source, and that a nutrient-medium supply, in particular having spray nozzles, is located spaced apart from the lower surface of the conveyor belt, the nutrient-medium supply ensuring that the plants and/orfungi are aeroponically supplied with nutrient medium in said region. Furthermore, during the movement, which is preferably both vertical and at least temporarily horizontal, the root region is continuously supplied with nutrients. On account of the special arrangement of the conveyor path having at least approximately vertically upwardly and downwardly extending path sections, the plants and/or fungi are continuously orbitropically realigned, which encourages plant growth.

Unlike in the known prior-art systems for automated plant cultivation, according to the present invention the conveyor belt is made of a sheet of a thermoplastic material, said sheet comprising a plurality of recesses for receiving biological material such as seeds, cuttings, rhizomes or root balls of the plants and/or fungi, at least one opening being formed in each of the recesses on the bottom side for penetration of roots and/or hyphen, respectively and/or for nutrient supply of the plants and/or fungi.
The invention can be used in OrbiPlant and OrbiLoop technology to implement a cost-effective, more flexible and efficient conveyor belt system. This can reduce production costs in the cultivation of plants, mosses, fungi and algae for various applications (e.g. food, pharmaceuticals, cosmetics, etc.) as well as costs in setting up production facilities.
The main advantages of the system are:
1. very inexpensive material for the price-sensitive agro market and thus cost-effective production of conveyor belts. Can be easily procured as roll, sheet or mat material.
2. easy customization of seed or plant support openings in spacing, size, shape and depth by thermoforming, punching or milling.
3. food safe and easy to clean materials and surfaces.
4. no separate plant holder device - all in one cast and avoid waste, e.g. additional rock wool blocks. No unnecessary crevices are created as in the case of roller blinds, which can lead to water penetration with the risk of leaf wetting.
5. punched drive structures integrated into the conveyor belt eliminate the need for costly toothed belts.
6. the slot structure in the bottom of the seed or plant holding openings allows substrate-free cultivation with easy harvesting without having to make changes to the conveyor belt.

According to a specific embodiment of the invention, the plurality of recesses in the sheet has been produced by means of punching, deep-drawing from a planar sheet of the thermoplastic material.

To ensure an optimum compromise between flexibility, durability and stiffness, it is advantageous that the sheet of a thermoplastic material has a thickness of 0.5 to 10 mm, preferably 1 to 5 mm, particularly preferably 1.5 to 3 mm.

According to a yet further embodiment of the invention it is possible that the thermoplastic material is selected from the group of polymers, such as PE, PP,
polyvinylcarbonate, polyamide, polyoxymethylene, polyethylene terephthalate, polybutylene terephthalate, polystyrene, polyurethane or combinations thereof as well as their processed forms, such as foamed or modified with additives.

Additionally, the at least one opening can have a circular or oval circumference or is formed as a slot, in particular a star-shaped slot.

Moreover, it is of advantage that the sheet of a thermoplastic material has at least on one edge, preferably on both edges and/or on one side, preferably on both sides, a structure for transport purposes, preferably a toothed belt structure.

Specifically, the sheet of a thermoplastic material is formed as an endless sheet.

In a specific embodiment of the invention, the conveyor belt includes, at least in regions, a carrier material in which the plants and/or fungi are at least temporarily fixed during transport along the conveyor path. Preferably, the carrier material is selected such that the seeds or plants and/or fungi are held firmly in place and the material can also distribute and at least temporarily store water and/or nutrient medium. Since the device according to the invention transports the plants and/or fungi at least temporarily approximately vertically, it is possible, according to a particular development of the invention, for the plants and/or fungi to be continuously moved, during the growth phase thereof, along an illumination source and/or towards said illumination source, the plants and/or fungi preferably being illuminated as soon as they are moved vertically. Advantageously, the root region located on the lower surface of the conveyor belt is simultaneously aeroponically supplied with nutrients and moisture. The aeroponic supply of nutrients to the root region also preferably takes place at least temporarily while the plants and/or fungi are being moved vertically. In this connection, it is conceivable for an upper deflection point to be provided between two vertically extending sections of the conveyor path such that the plants and/or fungi, together with the conveyor belt, are moved vertically upwards and then vertically downwards after passing the deflection point, the orientation of the plants and/or fungi, from the root to the tip of the shoot, being perpendicular to said movement direction.

It is generally conceivable to use natural light and/or artificial light for illumination, said artificial light being generated by means of an illumination unit having, for example, at least one fluorescent tube and/or LED. The provision of an illumination unit for generating light is advantageous in that the plants and/or fungi can be illuminated in a selective manner, in particular in a manner adapted to the type of plant to be grown and/or aligned with the plant growth, and at all times if required. According to a particular development of the invention, the plants and/or fungi are only illuminated in particular regions of the conveyor path, in particular in selected regions in which the plants and/or fungi are moved vertically and particularly preferably over half of the total vertical regions such that a day/night rhythm can be imitated. Advantageously, the plants and/or fungi are illuminated by vertically arranged LED panels or other illumination systems.

According to a specific development, the illumination unit is designed such that the plants and/orfungi are illuminated in specially selected sections of the conveyor path. Advantageously, the plants and/or fungi are illuminated while they are being moved continuously upwards along a vertical section of the conveyor path. Moreover, it is advantageous for the plants and/or fungi to be at least temporarily no longer illuminated after passing the deflection point, in particular as soon as said plants and/or fungi are being moved vertically downwards.

In a particularly advantageous embodiment, the plants and/or fungi fixed on the conveyor belt, in particular the roots below the conveyor belt, are aeroponically supplied with nutrient medium as soon as said plants and/or fungi are being moved vertically, while the plants and/or fungi are moved at least in part through an immersion bath in the region of a lower deflection point, which is located between two vertically extending sections of the conveyor path, such that the plants and/or fungi, in particular the roots, are hydroponically supplied with nutrients in said region. Over the serpentine or meandering conveyor path having vertically extending path sections, between which lower and upper deflection points or regions are located, the plants and/or fungi are thus continuously supplied with nutrients and moisture. A nutrient-medium misting system is preferably used to aeroponically water the roots of the plants and/or fungi. By means of an automated plant cultivation system designed as described above, it is preferably possible for the roots to be continuously aeroponically watered on the lower surface of the conveyor belt, while the plant carrier material is hydroponically bathed in the region of the lower deflection points when the conveyor belt is in the trough phase.

By fixing the plants and/or fungi on the conveyor belt, the roots are aeroponically watered continuously or at least for long periods of time, without unnecessarily moistening the leaves of the plant. In this way, diseases of the leaf mass are reliably prevented. The temperature and humidity of the atmosphere below the conveyor belt, in particular along the vertical conveyor path sections, are monitored by a sensor system, and the values are suitably controlled by a central control unit such that excessive humidity can be reliably avoided in said region.

Advantageously, the conveyor path is dimensioned and/or the speed of travel of the conveyor belt is/are adjusted such that a single up and down movement of the conveyor belt with one deflection in between, along with simultaneous lower-surface moistening of the root region, is configured as one module, a cultivation cycle of this kind preferably being completed in 24 hours. A modular design advantageously makes it possible to adapt an overall system for automated plant cultivation to any given requirements, i.e. to any given plant species and/or growing phase. By lengthening the conveyor belt by lining up modules, a complete growing period for a crop can be easily obtained, each module being adapted to the needs of the growth stage of the given plants and/orfungi with regard to nutritional requirements, illumination and surface area requirements. For this reason, according to a preferred embodiment of the invention, the individual modules or sections of the conveyor path, together with the conveyor belt, are designed such that it is possible to change in particular the length of the lower sections located between two vertically extending path sections. If a plurality of modules is assembled to form an overall system, it makes sense for the distances between an approximately vertically downwardly extending path section and an approximately vertically upwardly extending path section to widen as the transport duration of the plants and/or fungi increases, such that the distances are adapted to the plant growth. By deliberately varying the distance between the vertically extending paths, it is thus possible to adapt the distance to the given size of the plants and/or fungi fixed on the conveyor belt.

Furthermore, alternatively or as a complement to the above-described embodiment, it is advantageously conceivable to achieve the adjustment of a device for automated plant cultivation to the size requirements of the given plants and/or fungi by changing the distance between the points at which the individual plants and/or fungi are fixed on the conveyor belt. Preferably, mechanical elements are provided for this purpose, which ensure that the distance between the individual fixing points can be adjusted as required. For instance, it is conceivable for the individual fixing points to be spread further apart as the transport duration of a plant increases and the plant grows, with locking positions in different positions being conceivable. According to a further preferred embodiment of the invention, the conveyor belt has stiff lined-up slats, which may be made of various materials, such as polyvinyl chloride (PVC). Slats of this kind allow the plants and/or fungi to be easily anchored and are at the same time distinguished by a high degree of flexibility such that the conveyor belt can be guided over the deflection pulleys.

By adjusting the conveyor path or the conveyor belt to the changing size of the plants and/or fungi in this way, the increasing space requirement of the plant is met, and the use of material and energy is minimized. In this way, the system is operated particularly efficiently from both economic and ecological perspectives since expenditure is significantly reduced in the seedling phase for watering and illumination, for example.

According to the invention, the conveyor path or the conveyor belt moved along the conveyor path is moved along a closed circular or oval path. Two vertical sections and two horizontal sections in the region of the deflection points are thus provided, the horizontal sections interconnecting the vertical sections. By changing the length of the vertical sections of the conveyor belt, it is possible to construct a plant cultivation system of this kind to be, at least, practically as tall as desired. Preferably, an internal aeroponic nutrient supply for cultivating the moved plants and/or fungi is provided. A plant cultivation system of this kind is particularly suitable for cultivating strawberries, leaf lettuce, spinach, rocket and/or bush tomatoes. An advantageous harvest is possible if the plants and/or fungi or fruits are harvested in the region of the lower deflection point, in particular by means of an automated harvesting machine.

According to a further specific embodiment of the device according to the invention, an illumination unit is provided, which allows the plants and/or fungi to be irradiated with the suitable wavelengths in a selective, controlled manner. In this case too, it is again conceivable to adapt the illumination to the given needs of the plant and/or the different growth phases. In this way, the illumination of the plants and/or fungi is specially adapted to the plant growth. According to a further embodiment, the device is designed such that both illuminated and non-illuminated sections of the conveyor path are provided.

Furthermore, the device for automated plant cultivation according to the invention preferably has a fitting system, by means of which the conveyor belt and/or the carrier material provided on the conveyor belt is fitted with at least one seed and/or a seedling in an automated manner. It is also conceivable to provide, in a region of the conveyor belt, a harvesting module allowing the plant that has grown to a desired extent, in particular the leaves and/or the fruit, to be harvested. Further preferably, the device according to the invention has a section, preferably upstream of the harvesting model, in which the conveyor belt is cleaned and/or sterilized.

Preferably, a device according to the invention is designed such that a fitting unit and a harvesting unit are provided, between which a cleaning and/or sterilization system, in particular a steam sterilizing system, is located in the direction of movement of the conveyor belt such that the conveyor belt is cleaned and/or sterilized after the grown plants and/or fungi have been harvested and before refitting.

In relation to the fixing of the plants and/or fungi in or on the conveyor belt, it is in principle conceivable for the seeds and/or seedlings to be directly or indirectly fixed in or on the conveyor belt by means of a carrier material. According to an alternative embodiment, the conveyor belt has suitable plant containers that can be fitted with plants and/or fungi and are fastened to the circulating conveyor belt by means of fastening elements. In this connection, it is conceivable, for instance, for the conveyor belt to comprise at least one conveyor chain into which a hook of the plant container that serves as a fastening element is hooked as soon as a plant is to be transported along the conveyor path. Accordingly, if plant containers that can be connected to the conveyor belt are used, said containers are preferably detached from the conveyor belt or conveyor chain for the harvesting process, cleaned after the harvest is complete, and finally supplied back to the fitting system. At the start of the conveyor belt or conveyor tracks, corresponding plant containers are hooked into said tracks again after being fitted with a seed or seedling.

In addition to a specific device for automated plant cultivation, the invention further relates to a method for automated cultivation of crops or ornamental plants and/or fungi.

An essential feature of the method according to the invention is that the plants and/or fungi are transported in a manner rigidly fixed on the conveyor belt and are continuously orbitropically realigned by being at least practically vertically transported, at least temporarily, in conjunction with deflections at upper and lower deflection points. As a result of the plants and/or fungi being fixedly guided, it is furthermore relatively simple to ensure continuous aeroponic watering, without the leaves of the plants and/or fungi being unnecessarily moistened. For this reason, diseases of the leaf mass can be largely avoided. The way in which the leaves and the root region are spatially separated also allows an atmosphere that can be better controlled, and excessive humidity can be reliably avoided.

Furthermore, a particular advantage of the invention is that it is possible to adapt the conveyor path or the conveyor belt to the size of the plants and/or fungi. Preferably, this is done by mechanically expanding the conveyor belt in the region of the fixing points and/or expanding the distances between individual cultivation modules to meet the increasing space requirement of the growing plants and/or fungi. An illumination and watering procedure that is optimized to the altered distances between the plants and/or fungi allows considerable savings to be made with regard to set-up and energy consumption. The device according to the invention, in which cultivation modules having a vertical loop-like design are preferably lined up in a modular fashion, allows plants and/or fungi to be cultivated in a manner that is particularly flexible, adapted to the planting and the growth stage of the plants and/or fungi, and also economical. Furthermore, a combination with an automated fitting unit and/or harvesting unit at the start and end, respectively, of the conveyor path advantageously allows considerable cost savings to be made.

### BRIEF DESCRIPTION OF THE DRAWINGS

In the following, the invention will be described in more detail, without limiting the general inventive concept, on the basis of embodiments and with reference to the drawings.
FIG. 1 is a schematic view of a device for automated plant cultivation according to the invention.
FIG. 2 is a plan view of a conveyor belt suitable for a device for automated plant cultivation.
FIG. 3 is a schematic view of a demonstrator of a plant cultivation system according to the invention, used for a plant cultivation experiment.
FIG. 4 is a schematic view of a sheet made of a thermoplastic material according to the invention which can be used as conveyor belt.
FIG. 5 shows a projection onto a recess in which the opening at the bottom of the recess is visualized.
FIG. 6 shows a photography of an embodiment according to the invention of a deep-drawn recess with opening on the bottom side for receiving plants or seeds for subsequent rooting into the irrigation space of the OrbiPlant or OrbiLoop system

### DETAILED DESCRIPTION

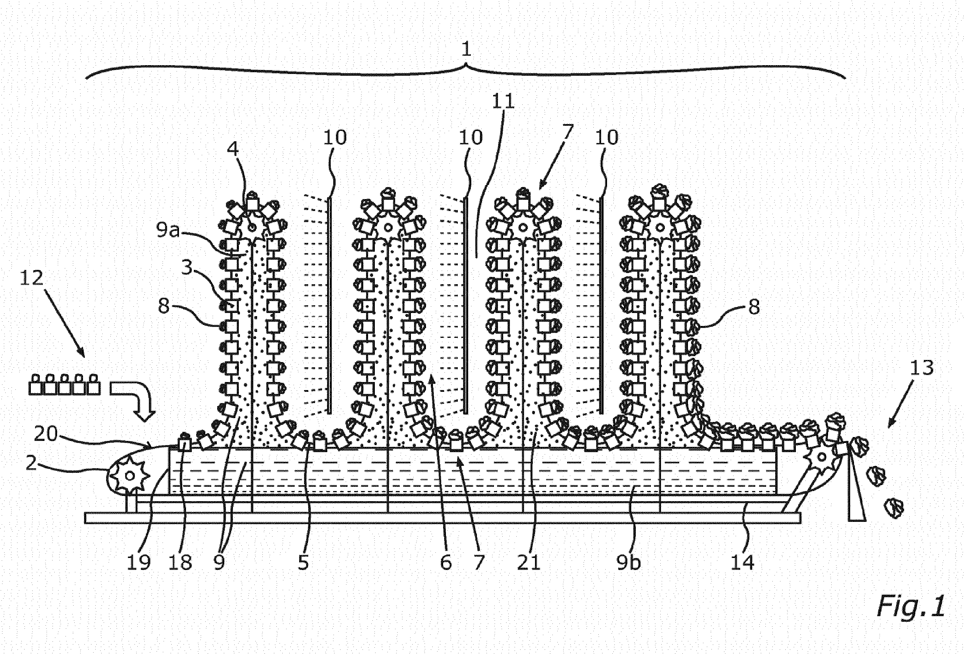

FIG. 1 is a schematic view of a device for automated plant cultivation according to the invention. An essential feature of said device is that the plants and/or fungi 8 are fixed on the conveyor belt 2 during transport along the conveyor path 1, the roots of the plants and/or fungi 8 being located, at least for the most part, on the other side of the conveyor belt 2 in relation to the leaves. The dimensions of the conveyor path 1 and the movement speed of the conveyor belt 2 are selected such that the period of time over which the plants and/or fungi 8 are moved along the conveyor path 1, from placing a seed or seedling on the conveyor belt 2 to removal from the conveyor belt 2, corresponds to a growing phase of the corresponding plant 8.

In relation to the arrangement of the conveyor path 1, it is particularly important that the plants and/or fungi 8 fixed on the conveyor belt 2 are moved both upwardly and downwardly vertically in sections, while the plants and/or fungi are moved at least temporarily horizontally between the individual vertical path sections 6, in particular in the region of the upper and lower deflection points 4, 5.

At the start of the conveyor path 1, a fitting unit 12 is provided, by means of which the receiving elements or receptacles 3 are made in the form of recesses (not visible in the schematic overview shown in FIG. 1) of the conveyor belt 2 are each fitted with a seedling 8. The receiving elements 3 according to the described embodiment each can have a carrier material 18, preferably rock wool, in which the plant 8, in particular the roots thereof are fixed. An essential feature is that the roots of the plants and/or fungi 8 are located in a region 19 below the conveyor belt 2, while the leaves extend in a region 20 above the conveyor belt 2. The regions 19, 20 in which the roots and the leaves are respectively located are thus spatially separate from one another. Furthermore, while the plants and/or fungi 8 are moved along the vertical sections 6 of the conveyor path 1, the roots are located in a ventilated space in which the plants and/or fungi 8 undergo an aeroponic moistening and nutrient supply process 9a.

On account of the specific design of the conveyor path 1, the conveyor belt 2 alternately moves the plants and/or fungi 8 vertically as far as an upper deflection point 4 and then down again towards a lower deflection point 5. As soon as the plants and/or fungi 8 reach the lower end of the vertical path 6, the plants and/or fungi are moved horizontally at least over a short path section 7. During the movement in the region of the lower deflection point 5, the carrier material, together with the roots of the plant 8 arranged therein, is immersed in an immersion bath 9b such that the plants and/or fungi 8 are hydroponically moistened and supplied with nutrients. Following the at least momentary horizontal movement, the plants and/or fungi 8 are moved once again over the next two vertical path sections 6 of the conveyor path 1, with the upper deflection point 4 therebetween. While the plants and/or fungi 8 are being moved along said vertical path sections 6, the plant roots once again undergo aeroponic moistening 9a on the lower surface of the conveyor belt 2.

A section of the conveyor path 1 consisting of, firstly, two vertical sections 6 in which the plants and/or fungi 8 are moved from bottom to top and then from top to bottom and, secondly, a deflection point 5 arranged between the vertical sections, is referred to as a module or cultivation module. The configuration of the module and the setting of the speed of the conveyor belt 2 are such that the plants and/or fungi 8 cycle through a module of this kind within 24 hours. An overall system is in turn composed of the number of modules required to achieve a complete growth phase of the given plant 8.

Furthermore, the device for automated plant cultivation has an illumination unit 10 designed such that while being moved along the conveyor path 1, the plants and/or fungi 8 are fully, or partly illuminated with artificially generated light and partly not illuminated. In the embodiment shown in FIG. 1, the plants and/or fungi 8 are always illuminated when they are being moved downwards along a vertical path section 6 between the upper deflection point 4 and the lower deflection point 5. However, a shaded phase 11 is provided when the plants and/or fungi 8 are being moved along a path section extending from bottom to top. In this connection, the illumination unit 10 is covered such that the plants and/or fungi 8 are not illuminated. In principle it is conceivable to adapt the type, intensity and duration of the illumination to the given type of plant. In each case, the illumination is controlled or is appropriately adjusted by means of sensors and a control unit. In the embodiment shown in FIG. 1, LED panels that are arranged opposite respective downwardly extending vertical path sections 6 are provided as illumination units 10.

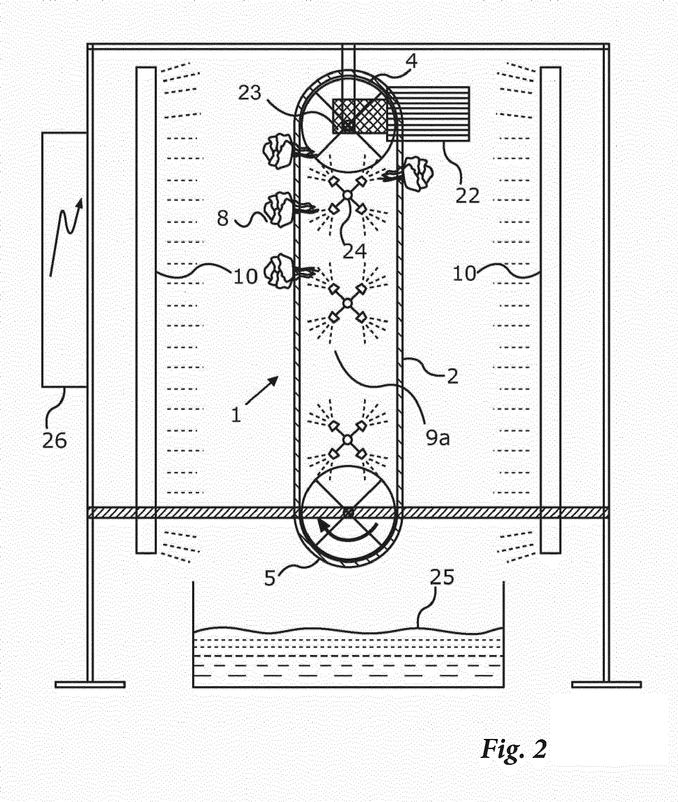

Moreover, the device for automated plant cultivation shown in FIG. 1 has an adjustment unit 21 such that the distance between the individual modules, which each consist of two vertical path sections 6 and an upper deflection point 4 arranged therebetween, can be adapted to the growth in size of the individual plants and/or fungi 8. As can be clearly seen in FIG. 1, the size of the plants and/or fungi 8 increases while they are being transported along the conveyor path 1. To the extent to which the plants and/or fungi 8 grow, the distance between the individual modules is increased and the illumination is adapted to the change in the light requirement on account of the larger amount of greenery of the plants and/or fungi 8. As a complement to said measures, the conveyor belt 2 is also designed such that the distance between the individual receiving elements 3 in which the plants and/or fungi are fixed can be changed on the basis of the plant growth. A specific embodiment of a conveyor belt 2 that can be adapted to the growth in size of the plants and/or fungi will be described in connection with FIG. 2.

At the end of the conveyor path 1, an automated harvesting unit 13 is provided, which removes, from the circulating conveyor belt 2, the plants and/or fungi 8 that have grown to normal size. Directly upstream of the harvesting unit 13, the conveyor belt 2 is deflected once again and then circulates back to the fitting unit 12. To ensure the required cleaning and sterilization of the conveyor belt 2, along the path between the harvesting unit 13 and the fitting unit 12 the conveyor belt 2 is first cleaned and then undergoes surface sterilization by means of a steam sterilization system 14. The conveyor belt 2 thus returns to the fitting unit 12 in a fully cleaned and sterilized state, the fitting unit refitting the individual receiving elements 3 of the conveyor belt 2 with carrier material 18, at least provided that said material cannot be used multiple times, and with seeds or seedlings 8.

As shown in FIG. 1, it is advantageous if the individual receiving elements 3 are first fitted with carrier material 18, provided that the material cannot be reused, and with a seed or seedling 8 in the fitting unit 12 or in an upstream process step, such that the already fitted receiving elements 3 can be placed on and/or fastened to the conveyor belt 2.

Generally, however, it is also conceivable for the receiving elements 3 to be integrated into the conveyor belt 2 or at least rigidly connected thereto such that the fitting unit 12 merely inserts a seed or a seedling 8 and, if required, fresh carrier material 18 into the receiving elements 3.

In both cases, it is possible for the receiving elements 3 to already have carrier material 18 into which seeds or seedlings 8 are inserted by the fitting unit 12, or for the individual receptacles 3 of the conveyor belt 2 to be fitted with a seed or a seedling 8 of which the roots are already in the carrier material 18.

FIG. 2 is a plan view of a portion of a conveyor belt 2 that can be adapted to the growth of the plants and/or fungi 8 while they are being conveyed along the conveyor path 1. It makes sense to adjust the distance between the individual receiving elements 3, as appropriate; this is because, as the plants and/or fungi 8 grow, in particular the leafy component increases, in the case of heads of lettuce for example, and thus the surface area requirement of the individual plants and/or fungi 8 also grows. For this reason, the individual receiving elements 3 of the conveyor belt 2 are suitably spread apart by means of mechanical elements such that the individual plant 8 has more space to grow and is sufficiently illuminated.

The above-described adaptation is achieved substantially by varying the distance between the receiving elements 3, in each of which a plant 8 or the roots thereof is/are fixed in the carrier material 18, on the basis of the time that the plants and/or fungi 8 have spent on the conveyor belt 2. Taking into consideration the extent and speed of the plant growth, the distances between the individual receptacles are increased while the plants and/or fungi 8 are being transported. In this connection, FIG. 2 shows a portion of a conveyor belt 2, together with plants and/or fungi 8 fixed thereto, in two different growth stages of the plants and/or fungi 8. While the plants and/or fungi 8 shown to the left in in FIG. 2 are still at the start of the conveyor path 1 and are relatively small, the plants and/or fungi are about to be harvested in the state shown to the right in FIG. 2 and have therefore reached a corresponding size. To take this growth in size into account, the distances between individual receiving elements 3 are considerably larger in the right side of FIG. 2 than the corresponding distances in the left side of FIG. 2.

In the embodiment shown in FIG. 2, the conveyor belt 2 has conveyor chains 15, to which the individual plant receptacles 3 are fastened by means of suitable, elastic transport belts 16. The transport belts 16 are designed such that both the distance A between the parallel transport belts 16 and the distance B between the receiving elements 3 fastened to a given transport belt 16 can be changed. While a change to the distance A can be achieved by moving the transport belts 16 outwards, the distances B between the individual receptacles 3 are changed by elastically elongating the transport belts 16 in the longitudinal direction. Similarly, an increase in the distances to the receiving elements 3 not directly connected to the transport belts 16 is achieved by providing, between the receiving elements 3, elastic connection elements 17 that are accordingly elongated when the transports belts 16 are moved.

The receptacles 3 can be fastened to the transport belts 16 by hooking at least part of the receptacles 3 into the transport belts 16. It is also conceivable for at least part of the receptacles 3 to be rigidly connected to one transport belt 16 each.

As can be seen in FIG. 2, however, not all the receptacles 3 have to be directly connected to a transport belt 16 but can also be indirectly connected to at least one transport belt 16 via other receptacles 3 by means of elastic connections 17. As the transport time of the plants and/or fungi 8 increases, the transport belts 16 are moved apart and longitudinally elongated, for example by coiling the transport belts around drums that are moved along the conveyor path by means of the transport mechanism, such that the distances between the receptacles 3, together with the plants and/or fungi 8 therein, increase. In this connection, it is also conceivable for elastically elongatable elements 17 to be provided merely between the individual receiving elements 3 and for merely the outer receptacles 3, i.e. the receptacles 3 located at the corner points in FIG. 2, to be pulled outwards. Similarly, the receptacles 3 could be arranged at different positions in an elastic net, or a corresponding elastic net could form at least part of the conveyor belt 2, it being possible to pull the net apart, as required, in particular on the basis of the plant growth, in order to change the distances between the receptacles 3, as required.

Furthermore, it is conceivable for the individual receptacles 3 not to be moved as a result of the movement of elastic connection elements 17, but for the individual receptacles 3 to be individually actively movable. Irrespective of the type of selected mechanism, it is essential that the distances between the individual receiving elements is changed both in the conveying direction and perpendicular thereto in order to meet the increasing space requirement of the plants and/or fungi.

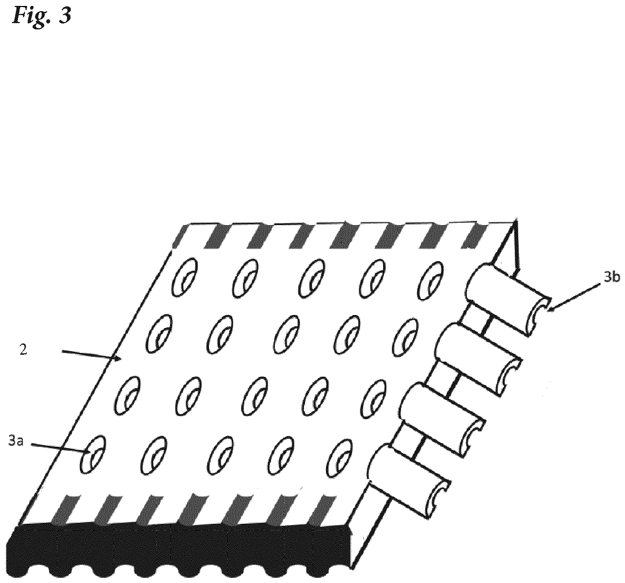

To check the technical feasibility and to prove the advantages of the solution according to the invention, a demonstrator shown schematically in FIG. 3 was constructed. Said demonstrator has a conveyor path 1 having a conveyor belt 2 that circulates in an oval shape and comprises two vertical path sections 6 and two horizontal path sections 7, one in the region of the upper deflection point 4 and another in the region of the lower deflection point 5. The horizontal path sections 7 of the conveyor path 1 are relatively short on account of the design of the demonstrator and are limited to the particular inversion region of the conveyor belt 2.

The conveyor belt 2 has slats made of a plastics material, preferably polyvinyl chloride (PVC), which are in the form of roller shutter elements and on which the plants and/or fungi 8 are arranged such that the roots protrude into a region 19 below the conveyor belt 2, while the leaves and/or fruits protrude into a region 20 above the conveyor belt 2. A nutrient supply unit 9 comprising means for aeroponic nutrient supply 9a is located below the conveyor belt or within the conveyor belt 2 circulating in an oval-like manner. In the embodiment shown, the aeroponic nutrient supply unit has three spraying nozzles 24 in the form of non-drip four-jet heads connected to a recirculating water pump system having a nutrient solution tank 25.

The conveyor belt 2 is driven by means of an electric motor 22 that is connected to the conveyor belt 2 by means of a worm drive 23.

To illuminate the plants and/or fungi, illumination strips having LEDs are provided as illumination units 10 in the region 20 above the conveyor belt and in parallel with the vertical path sections 6. The drive motor 22 and the illumination strips serving as illumination units 10 are connected to a central control unit 26, which adapts both the illumination and the speed at which the plants and/or fungi are moved along the conveyor path 1 to the requirements of the given plants and/or fungi being moved. For example, illumination and dark or shaded phases can be varied in this way. The demonstrator shown in FIG. 3 was installed in a climatic chamber having variable climate control and was used for growth experiments on various lettuce varieties.

In order to circumvent the disadvantages of a conveyor belt system based on PVC hollow chamber lamellas described above, the approach according to the invention uses plastic-based sheets and foils as web or roll yard goods as starting material for the production of the conveyor belt. Depending on stiffness and elasticity, webs with a thickness of 1 to 10 mm can be used. Preferred are 1.5-3 mm thick plastic webs such as polypropylene, polyethylene, polyurethane, polyvinyl carbonate as solid material, foamed or as a hollow chamber structure.

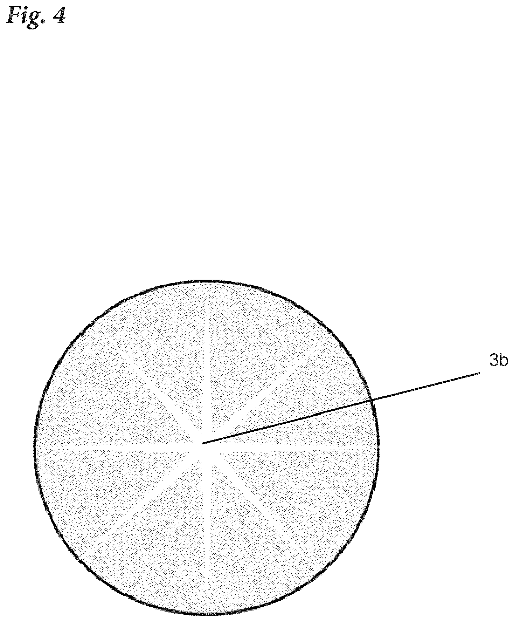

As shown in FIG. 4 a sheet made of a thermoplastic material according to the invention is shown which can be used as conveyor belt 2. The sheet is e.g. a plastic membrane which preferably is perforated or structured at the edges (in FIG. 3 the upper and lower end) to allow transport of the conveyor belt. Thus in accordance with the invention, a punched or perforated or deep-drawn structure can be provided on the outer edge for or deep-drawn structure can be used to transport the conveyor belt via a drive wheel. However, these structures could also be replaced by a strong tension roller drive. Important and of great advantage for the insertion of young plants or seeds into the conveyor belt is a punched or perforated or preferably deep-drawn structure 3a (deep-drawn openings for the insertion of young plants or seeds into the conveyor belt) into the conveyor belt according to the invention (). This cost-effective structuring can be very easily and individually adapted in terms of spacing, diameter, shape (round, square, etc.) and depth. The thermoformed structures are provided at their lowest point with an aperture created in various ways, e.g. multiple star-shaped slits 3b (cutout of deep-drawn seedling holding opening with opening on the bottom side for root penetration) or simple curvature, which will allow the plants to root through the conveyor belt into the irrigated root zone of the OrbiPlant or OrbiLoop system.

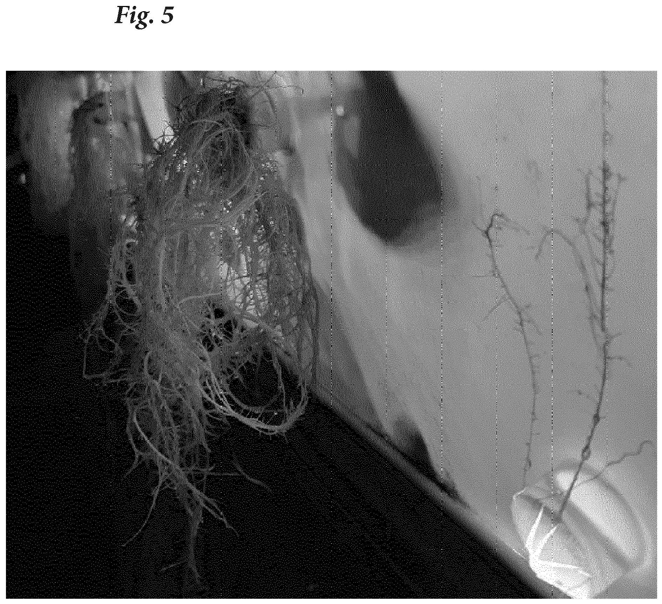

FIG. 5 shows a projection onto a recess 3a in which the opening at the bottom of the recess 3a in form of a star-shaped slit or slot for rooting according to the invention becomes visible.

Lastly, FIG. 6 shows a photography of an embodiment according to the invention of a deep-drawn recess 3a with opening 3b on the bottom side for receiving plants or seeds for subsequent rooting into the irrigation space of the OrbiPlant or OrbiLoop system.

### LIST OF REFERENCE NUMERALS

1 conveyor path
2 conveyor belt
3 receiving element/receptacle
3a recess
3b slot
4 upper deflection point
5 lower deflection point
6 vertical path section
7 horizontal path section
8 plant
9 nutrient supply unit
9a aeroponic nutrient supply unit
9b hydroponic nutrient supply unit
10 illumination unit
11 shaded phase
12 fitting unit
13 harvesting unit
14 cleaning and sterilizing unit
15 conveyor chain
16 transport belt
17 elastic connection elements
18 carrier material
19 region below the conveyor belt
20 region above the conveyor belt
21 adjustment unit
22 electric motor
23 worm drive
24 spraying nozzle
25 nutrient medium tank
26 central control unit

## Claims

1. A device for promoting the growth of plants and/or fungi (8), comprising a conveyor belt (2) which can be moved along a conveyor path (1) and is intended for transporting, at least in sections, plants and/or fungi (8) which are at least temporarily supplied with nutrients by a nutrient supply (9) and irradiated with natural light, and/or light artificially generated by an illumination unit (10), during movement along the conveyor path (1),
wherein the conveyor path (1) is at least approximately horizontal in at least one first section (7), and being at least approximately vertical in at least one second section (6),
wherein the plants and/or fungi (8) being at least temporarily fixed relative to the conveyor belt (2) during transport along the conveyor path (1) such that at least parts of roots of the plants and/or fungi (8) protrude into a region (19) located below a lower surface of the conveyor belt (2), while at least parts of leaves and/or fruits and/or fruiting bodies, respectively, of the plants and/or fungi (8) protrude into a region (20) located above an upper surface of the conveyor belt (2) which opposes the lower surface,
wherein the nutrient supply (9) in the region (19) located below a lower surface of the conveyor belt (2) comprises a nutrient supply unit (9) for aeroponic supply of the plants and/or fungi (8) with nutrients, which nebulizes a nutrient medium and/or dispenses it in the direction of the lower surface of the conveyor bel (2),
**characterized in that** the conveyor belt (2) is formed from a sheet of a thermoplastic material and has a plurality of recesses (3a) for receiving biological material such as seeds, cuttings, rhizomes or root balls of the plants and/or fungi (8), at least one opening (3b) being formed in each of the recesses (3a) on the bottom side for penetration of roots and/or hyphen, respectively and/or for nutrient supply of the plants and/or fungi (8).

2. Device according to claim 1, **characterized in that** the plurality of recesses (3a) has been produced by means of punching, deep-drawing from a planar sheet of the thermoplastic material.

3. Device according to one of the preceding claims, **characterized in that** the sheet of a thermoplastic material has a thickness of 0.5 to 10 mm, preferably 1 to 5 mm, particularly preferably 1.5 to 3 mm.

4. Device according to one of the preceding claims, **characterized in that** the thermoplastic material is selected from the group consisting of polyolefins, such as PE, PP; polyvinylcarbonate; polyamide, polyoxymethylene, polyesters, such as polyethylene terephthalate, polybutylene terephthalate, polystyrene, polyurethane or combinations thereof as well as their processed forms, such as foamed or modified with additives.

5. Device according to one of the preceding claims, **characterized in that** the at least one opening (3b) has a circular or oval circumference or is formed as a slot, in particular a star-shaped slot.

6. Device according to one of the preceding claims, **characterized in that** the sheet of a thermoplastic material has at at least on one edge, preferably on both edges and/or on one side, preferably on both sides, a structure for transport purposes, preferably a toothed belt structure.

7. Device according to one of the preceding claims, **characterized in that** the sheet of a thermoplastic material is formed as an endless sheet.

8. Sheet of a thermoplastic material for use in a device according to one of the preceding claims, comprising a plurality of recesses (3a) for receiving biological material such as seeds, cuttings, rhizomes or root balls of the plants and/or fungi (8), at least one opening (3b) being formed in each of the recesses (3a) on the bottom side for penetration of roots and/or hyphen, respectively and/or for nutrient supply of the plants and/or fungi (8).

9. Sheet according to the preceding claim, **characterized in that** the plurality of depressions (3a) was produced by means of punching, deep-drawing from a flat sheet of the thermoplastic material.

10. Sheet according to one of the both preceding claims, **characterized in that** the sheet of a thermoplastic material has a thickness of 0.5 to 10 mm preferably 1 to 5 mm, particularly preferably 1.5 to 3 mm.

11. Sheet according to one of claims 8 to 10, **characterized in that** the thermoplastic material is selected from the group consisting of polyolefins, such as PE, PP, polyvinyl carbonate, polyamide, polyoxymethylene, polyesters such as polyethylene terephthalate, polybutylene terephthalate, polystyrene, polyurethane or combinations thereof and their processed forms, such as foamed or modified with additives, or combinations thereof.

12. Sheet according to one of claims 8 to 11, **characterized in that** the at least one opening (3b) has a circular or oval circumference or is formed as a slot, in particular a star-shaped slot.

13. Sheet according to one of claims 8 to 12, **characterized in that** the sheet of a thermoplastic material has at at least on one edge, preferably on both edges and/or on one side, preferably on both sides, a structure for transport purposes, preferably a toothed belt structure.

14. Sheet according to one of claims 8 to 13, **characterized in that** the sheet of a thermoplastic material is formed as an endless sheet.
